# EUROPÄISCHE PATENTSCHRIFT

(11) **EP 2 025 429 B1**
(45) Veröffentlichungstag und Bekanntmachung des Hinweises auf die Patenterteilung: **14.07.2010**
(21) Anmeldenummer: 07015321.8
(22) Anmeldetag: 03.08.2007
(51) Int. Cl.: B21H 5/02, B21H 5/04, B23F 19/00

(54) **Arbeitsverfahren einer Zahnradbearbeitungsmaschine**
Method of operation of a gear-working machine
Procédé de fonctionnement d'une machine outil à engrenage

(43) Veröffentlichungstag der Anmeldung: 18.02.2009
(73) Patentinhaber: Linnenbrink, Wolfgang, 34414 Warburg (DE)
(72) Erfinder: Linnenbrink, Wolfgang, 34414 Warburg (DE)
(74) Vertreter: Rolf, Gudrun

(56) Entgegenhaltungen:
- CH-A- 130 484
- DE-A1- 2 047 037
- DE-A1- 2 302 527
- DE-A1- 3 119 853
- DE-A1- 19 963 477

## Beschreibung

Die Erfindung betrifft ein Arbeitsverfahren einer Zahnradbearbeitungsmaschine, insbesondere von außen-, aber auch innenverzahnten Stirn- oder Schraubrädern, mit einem auf einer Antriebsachse angeordneten, vorzugsweise diamantbeschichteten Bearbeitungsrad und einem zu bearbeitenden Zahnrad und mit einem, zumindest beim Ein- und/ oder Ausfädeln eines zu bearbeitenden Zahnrades auf einem oder von einem Dorn, fixen Achsabstand beider Räder, der kleiner ist als die Summe der beiden Kopfkreisradien und der größer ist als die Summe eines Kopfkreisradius des einen Rades und eines Fußkreisradius des anderen Rades.

Es ist eine Vorrichtung zum Glätten von Zahnflanken von Zahnrädern durch Rollen bekannt, DE 31 19 853 C2, bei dem ein Bearbeitungsrad auf ein zu bearbeitendes Zahnrad radial zugestellt wird, was den Nachteil aufweist, das vor dem gegenseitigen Einfädeln der Verzahnungen in einigen Fällen die Zahnköpfe gegeneinander schlagen können, was dazu führen kann, dass die sehr spröde Diamantbeschichtung großflächig von den Zahnflanken des Bearbeitungsrades abplatzt, so dass dieses nicht weiter verwendet werden kann.

Aufgabe der Erfindung ist es, ein Arbeitsverfahren einer Zahnradbearbeitungsmaschine zur Verfügung zu stellen, bei dem das Einfädeln sowie das Ausfädeln eines zu bearbeitenden Zahnrades in und aus der Verzahnung eines Bearbeitungsrades auf technisch einfache Art und Weise beschädigungsfrei erfolgen kann.

Die Lösung dieser Aufgabe erfolgt in Verbindung mit den Merkmalen des Oberbegriffs erfindungsgemäß mit den Merkmalen des kennzeichnenden Teils des Hauptanspruchs. Dadurch, dass das zu bearbeitende Zahnrad in beliebiger Drehwinkelstellung auf den Dorn aufgesetzt wird, wobei es mit Zahnbereichen seiner dem Bearbeitungsrad zugewandten seitlichen Außenfläche auf seitlichen Zahnbereichen des Bearbeitungsrades zur Anlage kommt, lässt sich durch ein in Drehung versetzen des Bearbeitungsrades, welches aber auch bereits vorher in eine leichte Rotation versetzt sein kann, das zu bearbeitende Zahnrad auf dem Dorn axial bis in seine Bearbeitungsposition bringen, nachdem die Zahnlücken der beiden sich überlappenden Bereiche der Räder übereinander gedreht wurden und die Räder gegenseitig in Eingriff gekommen sind, worauf das zu bearbeitende Zahnrad in seiner Bearbeitungsposition auf dem Dorn festgespannt wird und der eigentliche Bearbeitungsschritt beginnen kann.

Dieses vorteilhafte Arbeitsverfahren ermöglicht ein kollisionsfreies In-Eingriff-Bringen der Räder ohne radiale Zustellbewegungen eines der Räder, wodurch ein Kopf- auf- Kopf-Lauf der Zahnköpfe vollständig vermieden werden kann.

Des Weiteren ist kein technisch aufwändiges Vorpositionieren der Zähne erforderlich, so dass ein höchst effizientes, weil einfaches, robustes und trotzdem werkzeugschonendes Arbeitsverfahren einer Zahnradbearbeitungsmaschine bzw. ein erstes Teilarbeitsverfahren eines Einfädelns eines zu bearbeitenden Zahnrades zur Verfügung gestellt werden kann.

Vorteilhafte Weiterbildungen des erfindungsgemäßen Arbeitsverfahrens ergeben sich mit und in Kombination aus den nachfolgenden Unteransprüchen.

Gemäß einer ersten bevorzugten Ausführungsform einer Zahnradbearbeitungsmaschine mit in vertikalen Richtungen ausgerichteten Drehachsen, wie der Antriebsachse des Bearbeitungsrades und die angetriebene Achse des Dornes zur Aufnahme des zu bearbeitenden Zahnrades, wird zum Einfädeln einfach das Eigengewicht des zu bearbeitenden Zahnrades verwendet. Denkbar ist es jedoch auch, das zu bearbeitende Zahnrad zusätzlich zu halten und die Zufuhrbewegung nach beginnendem Kämmen der gegenseitigen Räder weiter zu beschleunigen oder aber die natürliche Fallbeschleunigung zu begrenzen, um das Arbeitsverfahren noch sicherer zu gestalten und ein Abplatzen des Schleifkorunds vollständig zu vermeiden.

Bei einer zweiten Ausführungsform einer Zahnradbearbeitungsmaschine mit in horizontalen Richtungen angeordneten Achsen der Antriebsachse des Bearbeitungsrades und des Dornes des zu bearbeitenden Zahnrades muss dieses natürlich durch eine zusätzliche Betätigungsvorrichtung in seine Bearbeitungsposition gebracht werden, wobei hier zunächst ein leichtes Anfahren des zu bearbeitenden Rades bis an das Bearbeitungsrad erfolgt und nach begonnenem Eingriff der gegenseitigen Zähne eine beliebig kraftunterstützte axiale Montagebewegung des zu bearbeitenden Zahnrades bis in seine Bearbeitungsposition erzeugt werden kann.

Entsprechend einem dem Einfädeln vorangehenden vorteilhaften Arbeitsschritt des vorliegenden Arbeitsverfahrens wird das zu bearbeitende Zahnrad einfach manuell auf den Dorn aufgesteckt und kann auch nach der durchgeführten Bearbeitung auch so wieder vom Dorn abgenommen werden. Denkbar ist jedoch auch ein Arbeitsverfahren, bei dem das zu bearbeitende Zahnrad automatisiert auf den Dorn aufgesteckt und auch so wieder davon abgenommen wird, so dass der Automatisierungsgrad des Arbeitsverfahrens dieser Zahnradbearbeitungsmaschine beliebig gesteigert werden kann.

Vorteilhaft ist des Weiteren, dass als Dorn zur Aufnahme des zu bearbeitenden Zahnrades ein Aufspanndorn verwendet wird, der erst nach Erreichen der Bearbeitungsposition des zu bearbeitenden Zahnrades dieses durch eine Vergrößerung seines Umfanges radial zentriert und festspannt, so dass keine weiteren Arbeitsschritte für eine axiale Fixierung des zu bearbeitenden Zahnrades erforderlich sind.

Das erfinderische Arbeitsverfahren lässt sich nicht nur bei außenverzahnten Stirn- oder Schraubrädern durchführen, sondern auch bei innen verzahnten Stirnrädern, die dann mittels einer Glocke erfindungsgemäß auf den Dorn der Zahnradbearbeitungsmaschine aufgesetzt werden können.

Des Weiteren kann das Arbeitsverfahren wahlfrei mit allen grad-, schräg- oder auch bogenverzahnten Stirnrädern durchgeführt werden, die ein mechanisches Einfädeln erlauben.

Gemäß einem weiteren vorteilhaften Arbeitsschritt des Arbeitsverfahrens erfolgt auch das Ausfädeln eines schräg- oder bogenverzahnten fertig bearbeiteten Zahnrades auf erfinderische Art und Weise, in dem nach dem Entspannen des Aufspanndornes das Bearbeitungsrad rückwärts angefahren wird, wobei das fertig bearbeitete Zahnrad per Hand oder von einem Greifer mit einem Stützmoment gehalten wird, wodurch es durch die Drehung des Bearbeitungsrades axial aus seiner Bearbeitungsposition vom Dorn weg bewegt wird.

Der Arbeitsschritt der Bearbeitung erfolgt wie üblich entweder bei fixem Achsabstand mit einer Einflankenberührung, wobei im Aufspanndorn die freie Drehung des zu bearbeitenden Zahnrades durch ein Stützmoment abgebremst wird. Die Bearbeitung kann jedoch auch über eine Zweiflankenberührung erfolgen, bei der der Achsabstand variiert wird. Die Aufhängung des Bearbeitungsrades und/ oder des zu bearbeitenden Rades der Zahnradbearbeitungsmaschine kann dabei wahlfrei, starr oder pendelnd ausgeführt sein, ebenso wie eine Oszillation eines der beiden Räder denkbar ist.

Nachfolgend wird der Ablauf des Arbeitsverfahrens anhand von Zeichnungen näher beschrieben. Es zeigen:

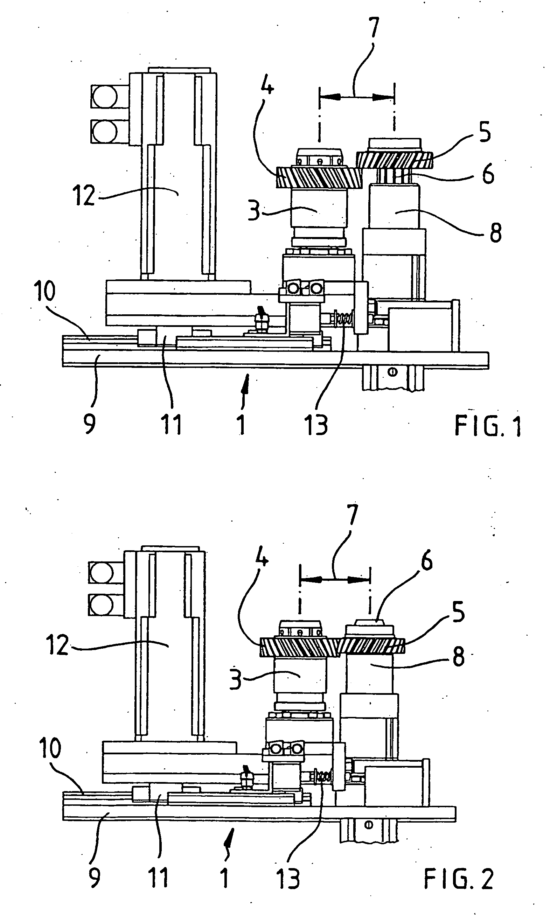

- Fig. 1: eine Zahnradbearbeitungsmaschine mit einem auf ein Bearbeitungsrad aufgesetzten zu bearbeitenden Zahnrad in Seitenansicht,
- Fig. 2: die Zahnradbearbeitungsmaschine gem. Fig. 1 mit eingefädeltem zu bearbeitenden Zahnrad,

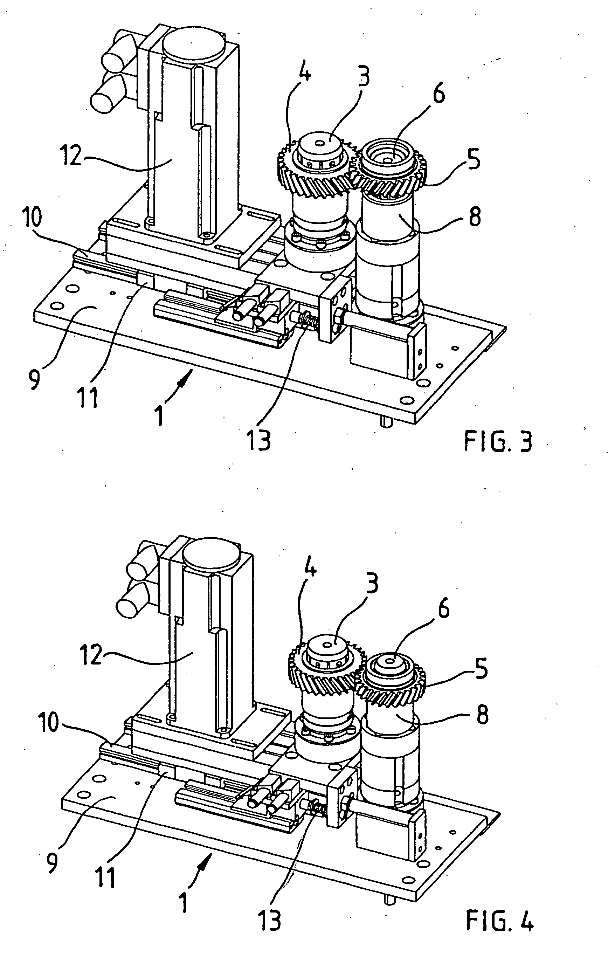

- Fig. 3: eine räumliche Ansicht der Zahnradbearbeitungsmaschine gem. Fig. 1 und
- Fig. 4: eine räumliche Ansicht der Zahnradbearbeitungsmaschine nach Fig. 2.

Die Zahnradbearbeitungsmaschine 1 besteht aus einer Grundplatte 9, auf der eine Führung 10 für einen Schlitten 11 angeordnet ist, auf dem ein elektrischer Antriebsmotor 12 und die Antriebsachse 3 für das Bearbeitungsrad 4 längsverschieblich angeordnet sind, um den Achsabstand 7 an unterschiedliche Zahnraddurchmesser anpassen zu können.

Auf der Grundplatte 9 ist des Weiteren der Dorn 6 zur Aufnahme des zu bearbeitenden Zahnrades 5 achsparallel zu der Antriebsachse 3 angeordnet, wobei die Antriebsachse 3 und der Dorn 6 als Spannachsen ausgebildet sind, die die Räder 4;5 axial spannen und zentrieren können. Zum Einfädeln des zu bearbeitenden Zahnrades 4 wird dieses einfach per Hand oder automatisch auf den Dorn 6 aufgesetzt und anschließend das Bearbeitungsrad 4, welches als Diamantwerkzeug ausgebildet ist, in eine leichte Drehung versetzt, wodurch die Zähne der Räder 4;5 in gegenseitigen Eingriff kommen, woraufhin das zu bearbeitende Zahnrad 5 durch sein Eigengewicht den Dorn 6 bis zu einer Bearbeitungsposition herunterrutscht und dann durch ein Aufweiten des Ausspanndornes 6 dort zentriert und festgespannt wird

Anschließend beginnt der Bearbeitungsschritt für das zu bearbeitende Zahnrad 4, entweder über eine Einflankenberührung mit einem festen Achsabstand 7, während dessen vom Dorn 6 ein Bremsmoment aufgebracht wird, oder es erfolgt eine Zwei-Flanken-Bearbeitung mit einem variablen Achsabstand 7, bei der beispielsweise über die Feder 13 eine vorbestimmte Anpresskraft erzeugt wird, um die gewünschte Glättwirkung des Bearbeitungsrades 4 auf dem zu bearbeitenden Zahnrad 5 zu erzielen.

Zum Ausfädeln wird der Dorn 6 des zu bearbeitenden Zahnrades 5 entspannt und das Bearbeitungsrad 4 rückwärts beschleunigt, wobei das zu bearbeitende Zahnrad 5 von einem Stützmoment gehalten wird und dabei axial nach oben vom Dorn 6 abgleitet. Das Stützmoment kann manuell durch einfaches Zufassen unter einer gleichzeitigen leichten Schraubbewegung nach oben erzeugt werden oder auch von einem Greifer, mit dem eine automatisierte Entnahme des fertig bearbeiteten Zahnrades 5 erfolgen kann.

## Patentansprüche

1. Arbeitsverfahren einer Zahnradbearbeitungsmaschine, insbesondere von außenverzahnten Stirn- oder Schraubrädern, mit einem auf einer Antriebsachse (3) angeordneten Bearbeitungsrad (4) und einem zu bearbeitenden Zahnrad (5) und mit einem, zumindest beim Ein- und/ oder Ausfädeln eines zu bearbeitenden Zahnrades (5) auf einen oder von einem Dorn (6), fixen Achsabstand (7) beider Räder (4;5), der kleiner ist als die Summe der beiden Kopfkreisradien und der größer ist als die Summe eines Kopfkreisradius des einen Rades (4;5) und eines Fußkreisradius des anderen Rades (5;4), **dadurch gekennzeichnet, dass** das zu bearbeitende Zahnrad (5) in beliebiger Drehwinkelstellung auf den Dorn (6) aufgesetzt wird, wobei es mit Zahnbereichen seiner dem Bearbeitungsrad (4)zugewandten seitlichen Außenfläche auf seitlichen Zahnbereichen des Bearbeitungsrades (4) zu Anlage kommt, woraufhin das Bearbeitungsrad (4) in Drehung versetzt wird oder sich bereits dreht und das zu bearbeitende Zahnrad (5) auf den Dorn (6) axial bis in seine Bearbeitungsposition gleitet, nachdem die Zahnlücken der beiden sich überlappenden Bereiche der Räder (4;5) übereinandergedreht wurden und die Räder (4;5) gegenseitig in Eingriff gekommen sind, woraufhin das zu bearbeitende Zahnrad (5) auf dem Dorn (6) festgespannt wird und die eigentliche Bearbeitung beginnt.

2. Arbeitsverfahren nach Anspruch 1, **dadurch gekennzeichnet, dass** die Antriebsachse (3) des Bearbeitungsrades (4) und die angetriebene Achse (8) des Dornes (6) des zu bearbeitenden Zahnrades (5) in vertikaler Richtung ausgerichtet sind und das zu bearbeitende Zahnrad (5) seine Bearbeitungsposition schwerkraftbedingt einnimmt.

3. Arbeitsverfahren nach Anspruch 1, **dadurch gekennzeichnet, dass** die Antriebsachse (3) des Bearbeitungsrades (4) und die angetriebene Achse (8) des Dornes (6) des zu bearbeitenden Zahnrades (5) in horizontalen Richtungen ausgerichtet sind und dass das zu bearbeitende Zahnrad (5) seine Bearbeitungsposition kraftunterstützt einnimmt.

4. Arbeitsverfahren nach einem der vorgenannten Ansprüche, **dadurch gekennzeichnet, dass** das zu bearbeitende Zahnrad (5) manuell oder automatisiert auf den Dorn (6) aufgesteckt und/ oder davon abgenommen wird.

5. Arbeitsverfahren nach einem der vorgenannten Ansprüche, **dadurch gekennzeichnet, dass** als Dorn (6) ein Aufspanndorn verwendet wird und das zu bearbeitende Zahnrad (5) im noch entspannten Zustand auf den Aufspanndorn aufgesteckt wird und ernst nach Erreichen der Bearbeitungsposition durch eine Vergrößerung des Umfanges des Dorns (6) von diesem radial zentriert und festgespannt wird.

6. Arbeitsverfahren nach einem der vorgenannten Ansprüche, **dadurch gekennzeichnet, dass** zum Ausfädeln eines schräg- oder bogenverzahnten fertig bearbeiteten Zahnrades (5) dieses auf dem Dorn (6) entspannt und das Bearbeitungsrad (4) rückwärts angefahren wird, wobei das fertig bearbeitete Zahnrad (5) mit einem Stützmoment gehalten und durch die Drehung des Bearbeitungsrades (4) dabei axial vom Dorn (6) wegbewegt wird.

7. Arbeitsverfahren nach Anspruch 6, **dadurch gekennzeichnet, dass** das Stützmoment manuell oder automatisiert, wie durch einen Greifer, auf das bearbeitete Zahnrad (5) aufgebracht wird.

## Claims

1. Operating method of a gearwheel working machine, in particular for externally toothed spur or helical wheels, with a working wheel (4) arranged on a drive shaft (3) and with a gearwheel (5) to be worked and with a centre distance (7) of the two wheels (4; 5) which is fixed at least when a gearwheel (5) to be worked is being slipped onto and/or slipped off from a mandrel (6) and which is smaller than the sum of the two tip-circle radii and is larger than the sum of a tip-circle radius of one wheel (4; 5) and of a root-circle radius of the other wheel (5; 4), **characterized in that** the gearwheel (5) to be worked is placed onto the mandrel (6) in any desired rotary angle position, at the same time coming to bear, with tooth regions of its lateral outer face confronting the working wheel (4), on lateral tooth regions of the working wheel (4), whereupon the working wheel (4) is set in rotation or is already rotating and slides the gearwheel (5) to be worked onto the mandrel (6) axially into its working position, after the tooth spaces of the two mutually overlapping regions of the wheels (4; 5) have been rotated one over the other and the wheels (4; 5) have come into mutual engagement, whereupon the gearwheel (5) to be worked is clamped on the mandrel (6), and actual working commences.

2. Operating method according to Claim 1, **characterized in that** the drive shaft (3) of the working wheel (4) and the driven shaft (8) of the mandrel (6) of the gearwheel (5) to be worked are oriented in a vertical direction, and the gearwheel (5) to be worked assumes its working position as a consequence of gravity.

3. Operating method according to Claim 1, **characterized in that** the drive shaft (3) of the working wheel (4) and the driven shaft (8) of the mandrel (6) of the gearwheel (5) to be worked are oriented in a horizontal direction, and **in that** the gearwheel (5) to be worked assumes its working position with the assistance of force.

4. Operating method according to one of the abovementioned claims, **characterized in that** the gearwheel (5) to be worked is attached onto the mandrel (6) and/or removed from the latter manually or in an automated manner.

5. Operating method according to one of the abovementioned claims, **characterized in that** the mandrel (6) used is a clamping mandrel, and the gearwheel (5) to be worked is attached in the still unclamped state onto the clamping mandrel and only after reaching the working position is radially centred and clamped by the mandrel (6) as a result of an enlargement of the circumference of the latter.

6. Operating method according to one of the abovementioned claims, **characterized in that**, to slip off a ready-worked gearwheel (5) having helical or spiral toothing, the latter is unclamped from the mandrel (6) and the working wheel (4) is moved up in reverse, the ready-worked gearwheel (5) being held by means of a supporting moment and at the same time being moved axially away from the mandrel (6) as a result of the rotation of the working wheel (4).

7. Operating method according to Claim 6, **characterized in that** the supporting moment is applied to the worked gearwheel (5) manually or in an automated manner, such as by means of a gripper.

## Revendications

1. Procédé de fonctionnement d'une machine d'usinage à roue dentée, notamment de pignons droits ou de pignons à dents hélicoïdes à denture extérieure, avec une roue d'usinage (4) disposé sur un axe d'entraînement (3) et une roue dentée (5) à usiner, et avec une distance axiale fixe (7) des deux roues (4, 5) au moins lors de l'enfilage ou de l'enlèvement d'une roue dentée à usiner (5) sur un ou depuis un mandrin (6), qui est plus petite que la somme des deux rayons des cercles de tête et qui est plus grande que la somme d'un rayon de cercle de tête d'une roue (4 ; 5) et d'un rayon de cercle de base de l'autre roue (4 ; 5), **caractérisé en ce que** la roue dentée à usiner (5) est posée dans une position d'angle de rotation quelconque sur le mandrin (6), et vient en appui avec des régions de dents de sa surface extérieure latérale tournée vers la roue d'usinage (4) sur des régions de dents latérales de la roue d'usinage (4), puis la roue d'usinage (4) est mise en rotation ou tourne déjà, et la roue dentée à usiner (5) glisse sur le mandrin (6) axialement jusque dans sa position d'usinage, après que les espaces entre les dents des deux régions des roues (4 ; 5) se chevauchant ont été tournés l'un sur l'autre et que les roues (4 ; 5) sont arrivées en prise l'une avec l'autre en sens inverse, puis la roue dentée à usiner (5) est serrée fixement sur le mandrin (6) et l'usinage proprement dit commence.

2. Procédé de fonctionnement selon la revendication 1, **caractérisé en ce que** l'axe d'entraînement (3) de la roue d'usinage (4) et l'axe entraîné (8) du mandrin (6) de la roue dentée à usiner (5) sont orientés dans la direction verticale et la roue dentée à usiner (5) adopte sa position d'usinage sous l'effet de la force de pesanteur.

3. Procédé de fonctionnement selon la revendication 1, **caractérisé en ce que** l'axe d'entraînement (3) de la roue d'usinage (4) et l'axe entraîné (8) du mandrin (6) de la roue dentée à usiner (5) sont orientés dans des directions horizontales et **en ce que** la roue dentée à usiner (5) adopte sa position d'usinage de manière assistée par une force.

4. Procédé de fonctionnement selon l'une quelconque des revendications précédentes, **caractérisé en ce que** la roue dentée à usiner (5) est enfichée manuellement ou automatiquement sur le mandrin (6) ou en est retirée.

5. Procédé de fonctionnement selon l'une quelconque des revendications précédentes, **caractérisé en ce que** l'on utilise comme mandrin (6) un mandrin de serrage, et la roue dentée à usiner (5) est enfichée dans l'état non encore serré sur le mandrin de serrage, et centrée radialement par le mandrin (6) puis serrée fixement seulement après avoir atteint la position d'usinage par une augmentation du pourtour du mandrin (6).

6. Procédé de fonctionnement selon l'une quelconque des revendications précédentes, **caractérisé en ce que** pour faire sortir une roue dentée usinée (5) à dentures obliques ou courbes, celle-ci est desserrée sur le mandrin (6) et la roue d'usinage (4) est entraînée vers l'arrière, la roue dentée usinée (5) étant maintenue avec un couple de support et étant enlevée ainsi axialement depuis le mandrin (6) par la rotation de la roue d'usinage (4).

7. Procédé de fonctionnement selon la revendication 6, **caractérisé en ce que** le couple de support est appliqué de manière manuelle ou automatisée, par exemple par un dispositif de préhension, sur la roue dentée usinée (5).
